Europäisches Patentamt

European Patent Office

Office européen des brevets

(11) Publication number: **0 411 607 A2**

# EUROPEAN PATENT APPLICATION

(21) Application number: **90114765.2**

(51) Int. Cl.5: **G02B 6/26**

(22) Date of filing: **01.08.90**

(30) Priority: **01.08.89 JP 201063/89**

(43) Date of publication of application:
**06.02.91 Bulletin 91/06**

(84) Designated Contracting States:
**DE FR GB IT NL**

(71) Applicant: **SUMITOMO ELECTRIC INDUSTRIES, LTD.**
**5-33, Kitahama 4-chome, Chuo-ku**
**Osaka-shi, Osaka 541(JP)**

Applicant: **NIPPON TELEGRAPH AND TELEPHONE CORPORATION**
**1-1-6, Uchisaiwai-cho**
**Chiyoda-ku, Tokyo-to(JP)**

Applicant: **SUMIDEN OPCOM, LTD.**
**6-31, Omori-Nishi 7-chome**
**Ota-ku, Tokyo(JP)**

(72) Inventor: **Shigematsu, Masayuki, c/o**
**Yokohama Works of**
**Sumitomo Electric Industries, Ltd., 1,**
**Taya-cho**
**Sakae-ku, Yokohama-shi, Kanagawa(JP)**

Inventor: **Shitomi Tatsuhiko, c/o Yokohama Works of**
**Sumitomo Electric Industries, Ltd., 1,**
**Taya-cho**
**Sakae-ku, Yokohama-shi, Kanagawa(JP)**
Inventor: **Nakazato Kohji, c/o Yokohama Works of**
**Sumitomo Electric Industries, Ltd., 1,**
**Taya-cho**
**Sakae-ku, Yokohama-shi, Kanagawa(JP)**
Inventor: **Tomita, Nobuo**
**2097-4, Ishizuka, Johoku-cho**
**Higashi-Ibaragi-gun, Ibaragi-ken(JP)**
Inventor: **Arimoto, Kazuhiko**
**c/o Sumiden Opcom, Ltd., 6-31, Omori-Nishi 7-chome**
**Ota-ku, Tokyo(JP)**
Inventor: **The other inventors have agreed to waive their entitlement to designation**

(74) Representative: **Görg, Klaus, Dipl.-Ing. et al**
**Hoffmann, Eitle & Partner Arabellastrasse 4**
**(Sternhaus)us)**
**D-8000 München 81(DE)**

(54) Embedded-in-optical-fiber type optical component.

(57) An optical element (4) is embedded in a gradually thinned portion of the core (11') of an optical fiber (1) such as a tapered portion of the optical fiber (11) so that an insertion loss can be decreased. The tapered portion (4) can be formed by heating and drawing an optical fiber.

*F i g. 4e*

## EMBEDDED-IN-OPTICAL-FIBER TYPE OPTICAL COMPONENT

BACKGROUND OF THE INVENTION

Field of the Invention

This invention relates to a construction of an embedded-in-optical-fiber type optical component with low loss and good connectability with optical fibers.

Description of the Prior Art

An embedded-in-optical-fiber type optical component is an optical component in which an optical element such as optical lens or the like is embedded in an optical fiber. As the optical component of the above type, there has been disclosed, for example, in a literature "On the Microwave Circuit Technique in Light Wave Bands --- An Attempt for the Study of Optical Passive Component Parts" by Shoji Kawakami, Technical Research Report, OCS88-1, Japanese Electronic Information Communications Society.

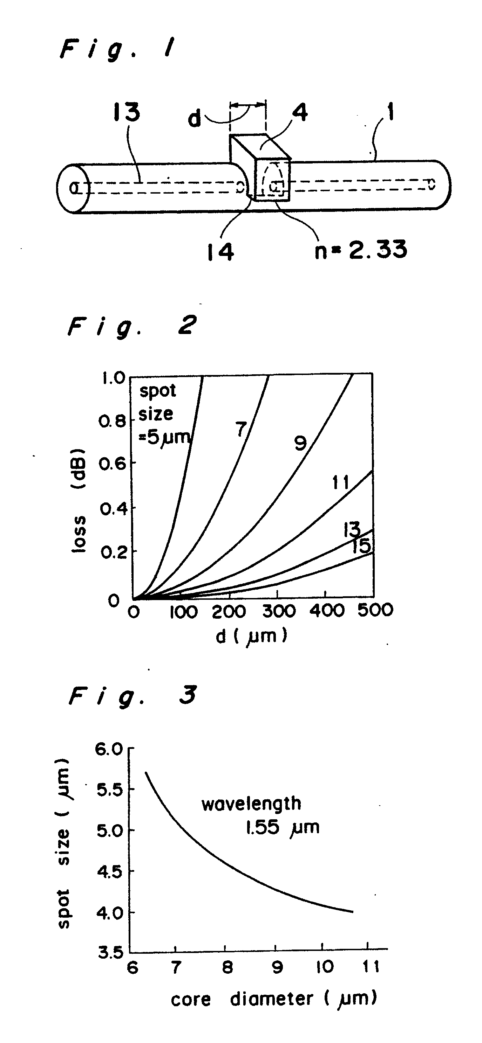

The embedded-in-optical-fiber type optical component disclosed in the literature is constituted, as shown in Fig. 1, in such a way that an optical fiber 1 is provided with a a groove 14 extending in a direction perpendicular to the axis of the optical fiber, with two parallel walls defining the groove. An optical element 4 is embedded into the groove 14. The reference numeral 13 denotes a core of the optical fiber 1.

The embedded-in-optical-fiber type optical component has several advantages shown below as compared with its conventional counterpart having been so formed that discrete components are placed in space, that is, it will:

(1) Eliminate the need of a lens,

(2) Substantially relieve the requirement for the positioning accuracy of discrete components,

(3) Eliminate the need of aligning optical fibers to each other,

(4) Realize reduction in size and enhancement in reliability, and

(5) Be good connectability with conventional optical fibers. For the objectives of the optical element 4 to be embedded in, there have been proposed laminated polarizers, isolators, and optical switch materials such as PLZT having an in-element optical path length of several tens to hundreds $\mu$m, which are passive or active optical elements having no waveguide structure of their own, whereas it is necessary, in embedding these optical elements into an optical fiber, to restrict the light diffraction loss at the gap portion of the optical fiber to a substantially low level to minimize the insertion loss thereof.

Fig. 2 shows the relation between the optical fiber gap length (d) and the diffraction loss with the parameter of the spot size of the optical fiber, where the spot size serves as a parameter showing the extension width of the optical power propagating through the optical fiber. The power distribution within the optical fiber is here assumed to be of the Gaussian type. It will be understood from Fig. 2 that the larger the spot size is, the lower the diffraction loss can be restricted. Like tendencies would result independently of that the refractive index of the optical element embedded in is assumed in Fig. 2 to be 2.33, that is, no matter what value the index may be.

As described above, an optical fiber large in its spot size can be used to reduce the diffraction loss. However, if this optical fiber is connected to a single mode optical fiber, whose spot size is 5 $\mu$m at a wavelength of 1.3 $\mu$m, a troublesome problem will occur that the resultant connection loss may be of significance due to mismatching in spot size between two connected optical fibers.

As seen in the aforementioned reference literature, a method has been attempted that for the purpose of enlarging the spot size only in the vicinity of the groove 14 or gap in Fig. 1, the optical fiber is heat treated locally so that additives such as $GeO_2$ forming the refractive distribution may be heat diffused in a radial direction of the optical fiber. This method, however, requires the optical fiber to be heated at a high temperature of approximately 1100 to 1400 $^\circ$C for a period of several hours, thus being impractical.

SUMMARY OF THE INVENTION

This invention provides an embedded-in-optical-fiber type optical component part which has solved the above problems, characterized in that an optical fiber is previously heated and drawn to form a gradually thinned portion where the core of the optical fiber is gradually thinned in diameter thereof, and an optical element is embedded in the gradually thinned portion of the core of the optical fiber.

To solve the above problems, the inventors have directed their attention to the fact that reducing the core diameter of an optical fiber causes the spot size thereof to be enlarged.

It is noted that one example of the gradually thinned portion has a tapered shape, therefore, the gradually thinned portion is referred to as tapered portion.

If an optical fiber is heated locally and drawn to thin the outer diameter of the heated portion for the formation of the tapered portion, the core diameter of the tapered portion will be decreased, with the result of an enlarged spot size. Then, it had been found that, through the steps of providing a groove in the tapered portion in the direction perpendicular to the axis of the optical fiber and embedding an optical element in the groove, the diffraction loss of the optical component can be decreased, whereby an optical component having low insertion loss can be realized.

As a heat source for locally heating the optical fiber, a conventional acetylene burner or the like may be used, forming the tapered portion easily.

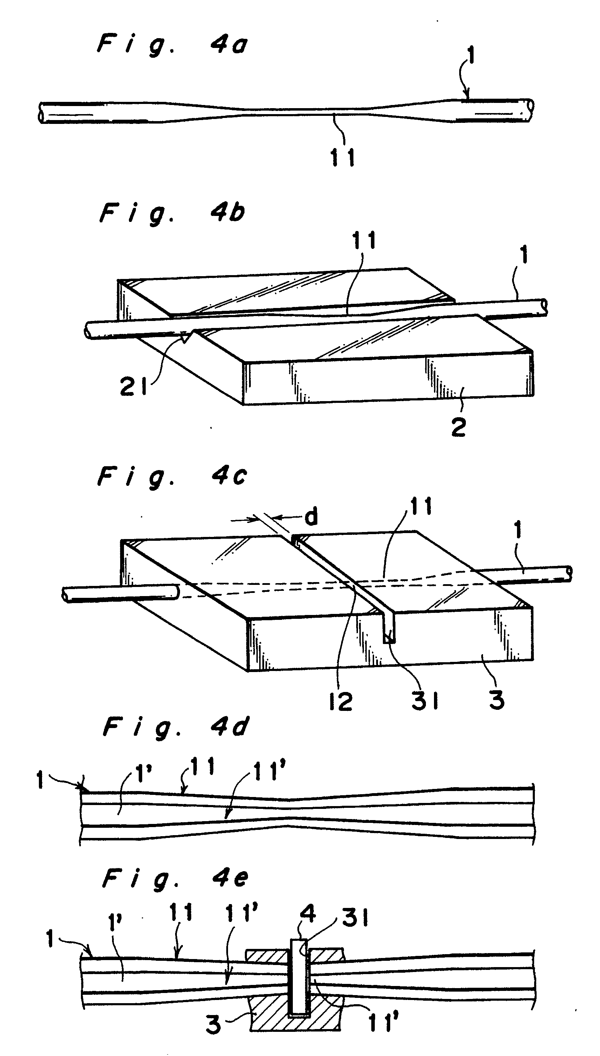

Fig. 3 shows the relation between the core diameter of an optical fiber and the spot size at a wavelength of 1.55 $\mu$m, taking the case of dispersion shift fiber. Reducing the core diameter render the spot size enlarged, where the less the core diameter, the more the resultant effect. Now, assuming that the spot size is enlarged from a standard value of 4 $\mu$m to 5.5 $\mu$m (standard value of the spot size for the conventional 1.3 $\mu$m band use optical fiber), it can be seen from Fig. 4 that, to enlarge the spot size from 4 $\mu$m to 5.5 $\mu$m, the core diameter has only to be reduced from 10 $\mu$m to 6.5 $\mu$m. To do this practically, it is sufficient to locally heat the optical fiber and draw it until the outer diameter of the heated portion may be 125 $\mu$m (standard outer diameter of an optical fiber)

$$\frac{6.5}{10} = 81$$

i.e. approximately 80 $\mu$m.

As shown so far, if an optical fiber is heated and drawn to reduce the core diameter thereof, the spot size can be enlarged and the diffraction loss reduced, while an excessively thinned outer diameter of the core may cause a problem.

The problem is that the outer diameter of the optical fiber gets approximately equal to the spot size thereof, so that the propagating light may be radiated into the medium surrounding the optical fiber or that, if the surrounding medium is absorbent, the propagating light may be absorbed thereinto. In order to avoid such a radiation loss or an absorption loss, with a dispersion shift fiber, the outer diameter of the optical fiber is required to be more than 40 $\mu$m. On the other hand, a larger spot size may weaken the confinement of the propagating light to within the core of the optical fiber, causing a deteriorated resistance against bending, so that a bending loss may be induced with a subtle displacement of the optical fiber when the optical fiber is subjected to heat treatment cycles or the like.

In consequence, while the diffraction loss can be reduced by heating and drawing an optical fiber so as to reduce the core diameter thereof, the outer diameter therein has its optimum value ranging from 100 to 40 $\mu$m.

BRIEF EXPLANATION OF THE DRAWINGS

Fig. 1 is a perspective view of an example of a conventional embedded-in-optical-fiber type optical component part,

Fig. 2 is a chart showing the relational characteristics between the gap length and the diffraction loss in Fig. 1,

Fig. 3 is a chart showing the relational characteristics between the core diameter and the spot size of a dispersion shift optical fiber, and

Fig. 4(a) is a side view of an example of an optical fiber in which a tapered portion according to the present invention is already formed;

Fig. 4(b) is a perspective view showing that the optical fiber in Fig. 4(d) is inserted and fixed into the V-groove,

3

Fig. 4(c) is a perspective view showing the optical fiber shown in Fig. 4(b) is cut and a groove is formed,

Fig. 4(d) is a schematic diagram showing the optical fiber with the core thereof in which the tapered portion is formed, and

Fig. 4(e) is a schematic diagram showing an example of the optical component according to the present invention in which an optical element is embedded in the optical fiber.

DETAILED DESCRIPTION OF THE PREFERRED EMBODIMENT

To verify the effect of this invention, the following experiment has been performed.

An optical fiber of a dispersion shift fiber type having a specific refractive index variance of 1 % has been used in this experiment. The parameters of the dispersion shift fiber used were 1.2 $\mu$m for the cut-off wavelength, 8 $\mu$m for the mode field diameter at a wavelength of 1.55 $\mu$m, and 125 $\mu$m for the clad diameter.

A cover sheath of the optical fiber cable was removed by 20 milmeters at an intermediate portion of the optical fiber cable to expose the optical fiber portion 1 and 5 milimeters of the portion 1 of the optical fiber was heated and drawn with a burner by means of a melting type photocoupler manufacturing machine, so that a tapered portion 11 was formed as illustrated in Fig. 4 (a). The length of the portion of the optical fiber subjected to the drawing was 7.0 mm. The loss increment in the drawing operation was less than 0.05 dB.

It is noted that by drawing the optical fiber, the core $1'$ is also drawn and the diameter of the core $1'$ can be decreased gradually, forming the tapered portion $11'$, as shown in Fig. 4 (d).

The optical fiber 1, in which the tapered portion 11 was formed as above, was accommodated in a V-shaped groove 21 of a silicon substrate 2 as shown in Fig. 4 (b), the groove 21 being machined on the surface portion of the substrate 2. In this state, the optical fiber 1 was fixed in the groove using an adhesive, and the outside of the optical fiber was resin molded as indicated by the numeral 3. Then, the substrate 3 and the optical fiber 1 was machined to form a groove 31, cutting the optical fiber 1 as shown in Fig. 4 (c), and the loss of the optical fiber 1 was measured. The width d of the groove 31 was 37 $\mu$m (micron meters).

The measuring results are shown in the Table 1, where a matching oil with a refractive index of 1.46 has been charged into the groove 31.

Table 1

| Condition | Outer diameter ($\mu$m) | Groove width ($\mu$m) | Loss after drawing | Insertion loss |
|---|---|---|---|---|
| Drawing | 70 | 37 | 0.02 dB | 0.57 dB |
| Drawing | 73 | 36 | 0.03 dB | 0.62 dB |
| No drawing | 125 | 38 | 0 | 1.2 |
| No drawing | 125 | 37 | 0 | 1.1 |

As understood from the above table, when the drawn optical fiber is used, the insertion loss can be decreased by 0.4 to 0.5 dB.

Furthermore, a similar experiment was conducted with the minimum diameter reduced down to 40 $\mu$m. From this experiment, it is proved that any outer diameter under 40 $\mu$m causes the temperature characteristics to be deteriorated and makes it difficult to steadily manufacture such optical component. On the contrary, with the minimum diameter in drawing over 100 $\mu$m, there can not be obtained the effect of decreasing the insertion loss.

In one example, the optical element 4 is embedded in the groove 31 so that the optical element 4 is put in the cut portion of the core $1'$ as shown in Fig. 4(e) so that the optical element 4 is placed to face both cut ends 30 of both of the cores $11'$ situated on both sides of the groove 31.

It is noted that the optical element may be placed in the optical fiber in such a portion that the diameter of the core is gradually changes.

As the optical element to be embedded in the optical fiber, there may be used laminated polarizers, isolators, and optical switch materials or the like.

As described hereinabove, an embedded-in-optical-fiber type optical component part of this invention will enable the insertion loss due to a gap to be reduced and therefore make effective in manufacturing various embedded-in-optical-fiber type optical component parts, by virtue of its construction that an optical fiber is heated and drawn to form a taper portion, where there is provided a gap for embedding an optical element.

## Claims

1. An embedded-in-optical-fiber type optical component so formed that a passive or active optical element is embedded in an optical fiber, characterized in that said optical element is placed in a portion of the optical fiber where the diameter of a core of the optical fiber is gradually changes.

2. An embedded-in-optical-fiber type optical component according to claim 1, wherein said portion of the optical fiber is tapered portion formed by heating and drawing the optical fiber.

3. An embedded-in-optical-fiber type optical component according to claim 2, wherein the minimum diameter of the portion of said optical fiber subjected to heating and drawing is within the range from 100 to 40 $\mu$m.

4. An embedded-in optical-fiber-type optical component which comprises a substrate, an optical fiber having a portion where the diameter of the core thereof is gradually changes, placed in a first groove formed on said substrate, a second groove formed on said substrate in a direction perpendicular to said first groove, said portion of the optical fiber being cut at the second groove so that both cut ends of the optical fibers situated on both sides of the second groove face to second groove, and an optical element placed in said second groove to face the cut ends of the optical fibers.

*F i g .  1*

*F i g .  2*

*F i g .  3*

*Fig. 4a*

*Fig. 4b*

*Fig. 4c*

*Fig. 4d*

*Fig. 4e*